# EUROPEAN PATENT APPLICATION

(11) **EP 4 636 899 A1**
(43) Date of publication of application: **22.10.2025**
(21) Application number: 22968927.8
(22) Date of filing: 22.12.2022
(51) Int. Cl.: H01M 10/0587

(54) **SECONDARY BATTERY AND ELECTRIC DEVICE**

(71) Applicant: Dongguan Amperex Technology Limited, Dongguan City, Guangdong Province 523000 (CN)
(72) Inventor: LEI, Tingling, Dongguan, Guangdong 523000 (CN)
(74) Representative: Icosa
(86) International application number: PCT/CN2022/140954
(87) International publication number: WO 2024/130626

(57) **Abstract**

This application discloses a secondary battery and an electrical device. The secondary battery includes an electrode assembly and a housing configured to accommodate the electrode assembly. A positive electrode plate in the electrode assembly includes: a positive current collector and a primer coating applied on a surface of the positive current collector. Along a winding direction of the electrode assembly, the primer coating includes a first primer coating and a second primer coating. The positive active material layer is located on a surface of the first primer coating. The second primer coating is disposed on at least a part of a surface of an outermost turn of the electrode assembly. The positive active material layer is not disposed on a surface of the second primer coating. A raised region and a recessed region are disposed on the second primer coating. An area of the raised region accounts for 50% to 80% of an area of the second primer coating. This application can improve safety performance of the secondary battery.

## Description

### TECHNICAL FIELD

This application relates to the field of battery technology, and in particular, to a secondary battery and an electrical device.

### BACKGROUND

Secondary batteries represented by a lithium-ion battery are prominently characterized by a high energy density, a long cycle life, no pollution, no memory effect, and the like. Used as a clean energy source, the secondary batteries have been gradually applied to a wide range of fields from electronic products to large-sized devices such as electric vehicles to meet the strategy of sustainable development of the environment and energy. This also imposes higher requirements on the safety performance of the secondary batteries.

Therefore, finding an appropriate method for improving the safety performance of secondary batteries is of great significance to the development of secondary batteries.

### SUMMARY

An objective of this application is to provide a secondary battery and an electrical device to improve safety performance of the secondary battery.

A first aspect of this application provides a secondary battery. The secondary battery includes an electrode assembly and a housing configured to accommodate the electrode assembly. A positive electrode plate in the electrode assembly includes: a positive current collector and a primer coating applied on a surface of the positive current collector.

Along a winding direction of the electrode assembly, the primer coating includes a first primer coating and a second primer coating. The positive active material layer is located on a surface of the first primer coating. The second primer coating is disposed on at least a part of a surface of an outermost turn of the electrode assembly. The positive active material layer is not disposed on a surface of the second primer coating. A raised region and a recessed region are disposed on the second primer coating. An area of the raised region accounts for 50% to 80% of an area of the second primer coating.

Without intending to be limited by any theory or explanation, the second primer coating disposed on at least a part of the surface of the outermost turn of the electrode assembly is rougher than a blank positive current collector or a uniform-thickness primer coating, so as to provide a relatively high friction coefficient between the outermost turn of the electrode assembly and the inner wall of the housing. In this way, in the case of a drop of the secondary battery, the electrode assembly is not prone to slide relative to the housing, thereby reducing the impact of the electrode assembly on the housing, reducing the risk of failure of the secondary battery caused by the drop, and in turn, improving the safety performance of the secondary battery. In addition, by disposing the second primer coating on at least a part of the surface of the outermost turn of the electrode assembly, this application can reduce the risk of failure of the secondary battery caused by a drop. The secondary battery of this application is simple in term of the manufacturing process, without introducing a complex structure inside the secondary battery, thereby greatly reducing the processing difficulty and manufacturing cost of the secondary battery. In this way, the secondary battery of this application can be of high safety performance and can be manufactured at a high production capacity.

In any embodiment, the area of the raised region accounts for 55% to 70% of the area of the second primer coating. When the area percentage of the raised region in the second primer coating falls within the above suitable range, the second primer coating can be of both high roughness and suitable mechanical strength. In this way, the outermost turn of the electrode assembly can possess not only a high coefficient of friction with the inner wall of the housing, but also suitable strength. Therefore, when the secondary battery of this application drops, the electrode assembly is not prone to slide relative to the housing. In addition, the electrode assembly can withstand a specified impact force, thereby further improving the safety performance of the secondary battery.

In any embodiment, a ratio of the thickness d₁ of the recessed region to the thickness d₂ of the raised region is 0 to 4/5. The ratio of the thickness of the recessed region to the thickness of the raised region, falling within the above appropriate range, can increase the friction coefficient between the outermost turn of the electrode assembly and the inner wall of the housing, and at the same time, endow the second primer coating with relatively high structural stability. In this way, a relatively large friction coefficient can be maintained between the outermost turn of the electrode assembly and the inner wall of the housing, thereby reducing the risk of failure of the secondary battery that drops, and in turn, improving the safety performance of the secondary battery.

In any embodiment, a ratio of the thickness d₁ of the recessed region to the thickness d₂ of the raised region is 1/3 to 4/5. The ratio of the thickness of the recessed region to the thickness of the raised region, falling within the above appropriate range, can increase the friction coefficient between the outermost turn of the electrode assembly and the inner wall of the housing, and at the same time, further increase the structural stability of the second primer coating. This setting further reduces the risk of failure of the secondary battery that drops, and thereby further improving the safety performance of the secondary battery.

In any embodiment, the thickness d₁ of the recessed region is 1 µm to 2.5 µm. When the thickness of the recessed region falls within the above suitable range, on the one hand, this setting reduces the processing difficulty of the second primer coating. On the other hand, this setting makes the second primer coating be of suitable mechanical strength, thereby making the second primer coating be good structural stability. Still on the other hand, this setting enables the secondary battery to maintain a high volumetric energy density. In this way, the secondary battery of this application can be of high safety performance and a high volumetric energy density.

In any embodiment, µ is a friction coefficient between the outermost turn of the electrode assembly and an inner wall of the housing, and 0.35 ≤ µ ≤ 0.5.

In any embodiment, µ is a friction coefficient between the outermost turn of the electrode assembly and an inner wall of the housing, and 0.39 ≤ µ ≤ 0.45.

When the friction coefficient between the outermost turn of the electrode assembly and the inner wall of the housing falls within the above appropriate range, the risk of failure of the secondary battery that drops is significantly reduced, thereby further improving the safety performance of the secondary battery.

In any embodiment, the raised region includes a plurality of protrusions spaced apart, and/or the recessed region includes a plurality of recesses spaced apart.

In any embodiment, the outermost turn of the electrode assembly includes two curved portions and two straight portions. The second primer coating is disposed on a surface of at least one of the straight portions. In order to further increase the friction surface, the second primer coating may be disposed on the whole outermost turn instead. This arrangement can further improve the safety performance of the secondary battery.

A second aspect of this application provides an electrical device. The electrical device includes the secondary battery disclosed herein.

The electrical device of this application contains the secondary battery of this application, and therefore, achieves at least the same advantages as the secondary battery.

### BRIEF DESCRIPTION OF DRAWINGS

To describe the technical solutions of some embodiments of this application more clearly, the following outlines the drawings to be used in some embodiments of this application. Evidently, the drawings outlined below are merely illustrate a part of embodiments of this application.
FIG. 1 is a schematic diagram of an electrode assembly in a secondary battery according to an embodiment of this application;
FIG. 2 is a schematic diagram of an electrode assembly in a secondary battery according to another embodiment of this application;
FIG. 3 is a schematic diagram of an electrode assembly in a secondary battery according to still another embodiment of this application;
FIG. 4 is a schematic diagram of an electrode assembly in a secondary battery according to yet another embodiment of this application;
FIG. 5 is a schematic longitudinal section view of a positive electrode plate in a secondary battery according to an embodiment of this application;
FIG. 6 is a top view of the positive electrode plate shown in FIG. 5;
FIG. 7 is a schematic longitudinal section view of a positive electrode plate in a secondary battery according to another embodiment of this application;
FIG. 8 is a top view of the positive electrode plate shown in FIG. 7;
FIG. 9 is a schematic diagram of a second primer coating in a secondary battery according to an embodiment of this application;
FIG. 10 is a schematic diagram of a second primer coating in a secondary battery according to another embodiment of this application;
FIG. 11 is a schematic diagram of a second primer coating in a secondary battery according to still another embodiment of this application;
FIG. 12 is a schematic diagram of a second primer coating in a secondary battery according to yet another embodiment of this application;
FIG. 13 is a schematic diagram of a second primer coating in a secondary battery according to yet another embodiment of this application;
FIG. 14 is a schematic diagram of a second primer coating in a secondary battery according to yet another embodiment of this application;
FIG. 15 is a schematic diagram of a second primer coating in a secondary battery according to yet another embodiment of this application;
FIG. 16 is a schematic diagram of a second primer coating in a secondary battery according to yet another embodiment of this application; and
FIG. 17 is a schematic diagram of an electrical device that uses a secondary battery of this application as a power supply according to an embodiment of this application.

### List of reference numerals:

10 electrode assembly; 100 positive electrode plate; 110 positive current collector; 110a surface of a positive current collector; 120a first primer coating; 120b second primer coating; 130 positive active material layer; 01 protrusion; 02 recess.

### DETAILED DESCRIPTION

To make the objectives, technical solutions, and beneficial effects of this application clearer, the following describes this application in further detail with reference to embodiments. Understandably, the embodiments described in this specification are merely intended for interpreting this application but not intended to limit this application.

For brevity, just some of numerical ranges are expressly disclosed herein. However, any lower limit may be combined with any upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. Therefore, each point or each single numerical value may be used as a lower limit or upper limit of the range to combine with any other point or other single numerical value or with any other lower or upper limit to form an unspecified range.

It is hereby noted that in the description herein, unless otherwise specified, a range defined by a numerical value qualified by "at least" or "at most" includes this numerical value, and the word "more" in the phrase "one or more of" means at least two.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

The term "approximately" is intended to describe and represent small variations. When used together with an event or situation, the term "approximately" may represent an example in which the event or situation occurs exactly or an example in which the event or situation occurs very approximately. For example, when used together with a numerical value, the term "approximately" may represent a variation range falling within ±10% of the numerical value, such as ±5%, ±4%, ±3%, ±2%, ±1%, ±0.5%, ±0.1%, or ±0.05% of the numerical value. In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The above summary of this application is not intended to describe every disclosed embodiment or every implementation of this application. The following description exemplifies illustrative embodiments in more detail. In several places throughout this application, guidance is provided through a series of embodiments. The embodiments may be used in various combinations. In each instance, an enumerated list serves merely as a representative list, but is not to be construed as an exclusive list.

As mentioned in the background art section above, improving the safety performance of a secondary battery is of great significance to the development of secondary batteries.

A secondary battery typically includes an electrode assembly and an outer package configured to accommodate the electrode assembly. An inner wall of a typical outer package such as an aluminum laminated film is relatively smooth. Therefore, the friction between the electrode assembly and the inner wall of the outer package is relatively small, and the electrode assembly is prone to wobble inside the outer package. In the case of a drop, the electrode assembly is prone to move relative to the outer package, thereby tearing the aluminum foil, bursting the top seal, and damaging the corners of the outer package, and in turn, causing the battery to fail.

In the related art, in order to improve the drop test pass rate of the battery, double-sided tape is usually disposed between the electrode assembly and the outer package, or the inner wall of the outer package is bonded to the electrode assembly by glue to reduce the wobble of the electrode assembly; or the outer package is reinforced, for example, an adhesive is affixed to the outer package aluminum foil to increase the local strength of the aluminum foil; or a buffer structure is added between the electrode assembly and the outer package to alleviate the impact force of the electrode assembly on the outer package when the battery drops. However, such methods are costly and difficult to implement, produce a very limited effect on improving the safety performance of the secondary battery, and fail to meet users' expectations.

To solve the above problem, through in-depth thinking and plenty of experiments, the applicant hereof provides a secondary battery and an electrical device. An electrode assembly of the secondary battery includes a specified positive electrode plate that endows the secondary battery with high safety performance.

### Secondary battery

A first aspect of this application provides a secondary battery. The secondary battery includes any device in which an electrochemical reaction occurs to implement conversion between chemical energy and electrical energy. Specific examples of the secondary battery may include all kinds of lithium secondary batteries or sodium secondary batteries.

The secondary battery of this application includes an electrode assembly and a housing configured to accommodate the electrode assembly. The electrode assembly may be prepared from a positive electrode plate, a negative electrode plate, and a separator by a winding process.

A positive electrode plate in the electrode assembly includes: a positive current collector and a primer coating applied on a surface of the positive current collector.

Along a winding direction of the electrode assembly, the primer coating includes a first primer coating and a second primer coating. The positive active material layer is located on a surface of the first primer coating. The second primer coating is disposed on at least a part of a surface of an outermost turn of the electrode assembly. The positive active material layer is not disposed on a surface of the second primer coating. A raised region and a recessed region are disposed on the second primer coating. An area of the raised region accounts for 50% to 80% of an area of the second primer coating. For example, the area of the raised region may account for 50%, 55%, 60%, 65%, 70%, 75%, or 80% of the area of the second primer coating, or the area percentage of the raised region may be a value falling within a range formed by any two thereof.

The specific form of the housing is not particularly limited herein. The housing may be, but is not limited to, a housing known in the art for sealing the electrode assembly and an electrolyte solution. In some embodiments, the housing may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

In this application, the specific form of the positive current collector is not particularly limited herein. The positive current collector may be, but is not limited to, metal foil or a composite current collector. As an example of the metal foil, the positive current collector may be aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

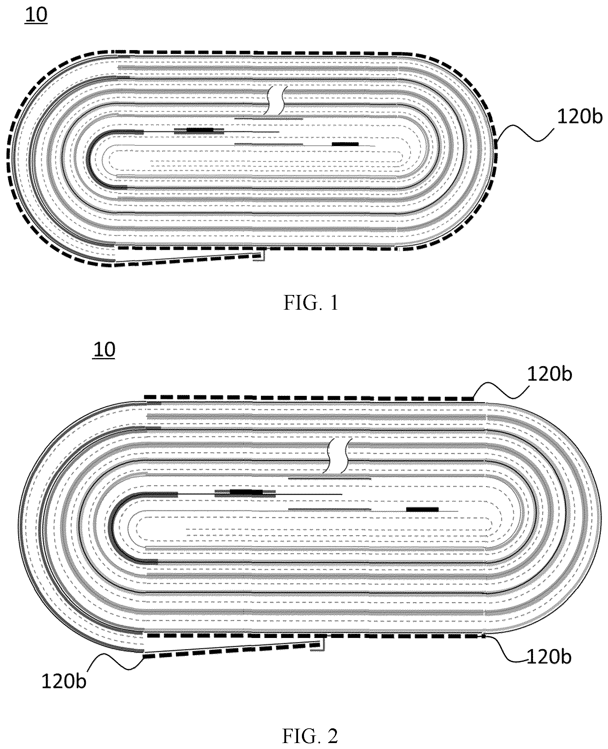

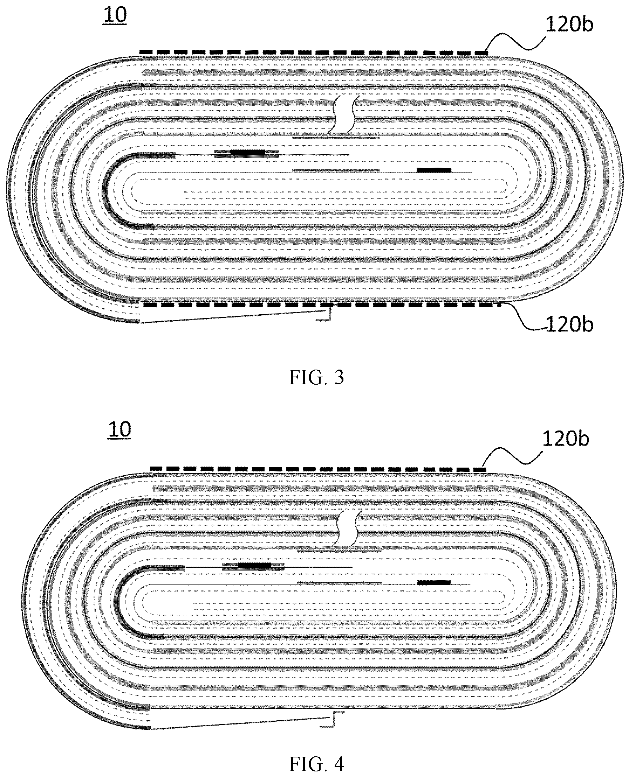

The second primer coating may be a primer coating of substantially the same composition as the first primer coating. In some embodiments, the second primer coating is disposed on at least a part of the surface of the outermost turn of the electrode assembly, that is, the second primer coating may fully cover the outermost turn of the electrode assembly, or cover a part of the surface of the outermost turn of the electrode assembly. FIG. 1 is a schematic diagram of an electrode assembly in a secondary battery according to an embodiment of this application. As shown in FIG. 1, in the exemplary electrode assembly 10, the surface of the outermost turn of the electrode assembly 10 is fully coated with the second primer coating 120b. In addition, generally, when the battery is mounted in a product such as a mobile phone, the left and right arcuate surfaces are usually not squeezed at all or little squeezed. The increase in the friction coefficient at the positions of the left and right arcuate surfaces produces limited improvement on the drop test pass rate. When the outermost turn of the electrode assembly 10 includes two curved portions and two straight portions and the surface of at least one straight portion is coated with a second primer coating 120b, the technical solution shown in FIG. 1 can adopt the structure shown in FIG. 2. In addition, a simplified structure, as in the technical solutions shown in FIG. 3 and FIG. 4, also significantly improves the drop test pass rate.

In some embodiments, on the surface of the positive current collector, the second primer coating and the first primer coating may be continuously distributed except the region for welding tabs.

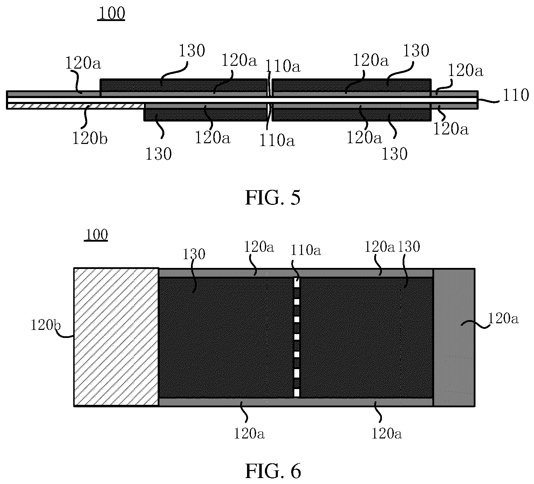

FIG. 5 and FIG. 6 are schematic diagrams of a positive electrode plate in a secondary battery according to an embodiment of this application. The positive electrode plate may be wound together with a negative electrode plate and a separator to form an electrode assembly. FIG. 5 is a schematic longitudinal section view of the exemplary positive electrode plate 100, and FIG. 6 is a top view of the exemplary positive electrode plate 100. As shown in FIG. 5 and FIG. 6, in the positive electrode plate 100, a primer coating is provided on the surface of the positive current collector 110. The primer coating includes a first primer coating 120a and a second primer coating 120b. After being wound, the second primer coating 120b may be located at the outermost turn of the electrode assembly. The first primer coating 120a is located at a middle section position of the positive electrode plate of the electrode assembly. Optionally, the first primer coating 120a may extend to the tail of the positive electrode plate and be disposed opposite to the second primer coating 120b. Further, optionally, the first primer coating 120a may extend to a winding start end of the positive electrode plate instead. The positive active material layer 130 is located on the surface of the first primer coating 120a. The tab may be welded to the surface 110a of the positive current collector located at the middle section position of the positive electrode plate. Comprehensibly, the surface 110a of the positive current collector may be a blank current collector surface reserved during coating and uncoated with the primer coating and the positive active material layer, or may be a blank current collector surface formed by hollowing out a part of the positive active material layer 130 and the first primer coating 120a after continuous coating.

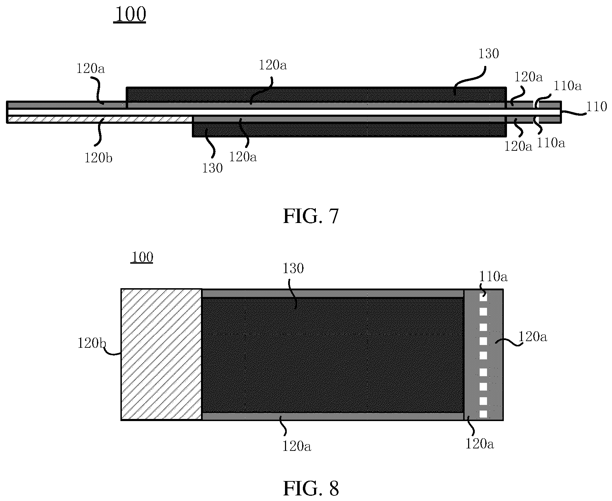

FIG. 7 and FIG. 8 are schematic diagrams of a positive electrode plate in a secondary battery according to an embodiment of this application. The positive electrode plate may be wound together with a negative electrode plate and a separator to form an electrode assembly. FIG. 7 is a schematic longitudinal section view of the exemplary positive electrode plate 100, and FIG. 8 is a top view of the exemplary positive electrode plate 100. As shown in FIG. 7 and FIG. 8, in the positive electrode plate 100, a primer coating is provided on the surface of the positive current collector 110. The primer coating includes a first primer coating 120a and a second primer coating 120b. After being wound, the second primer coating 120b may be located at the outermost turn of the electrode assembly. The first primer coating 120a is located at a middle section position of the positive electrode plate of the electrode assembly. Optionally, the first primer coating 120a may extend to the tail of the positive electrode plate and be disposed opposite to the second primer coating 120b. Further, optionally, the first primer coating 120a may extend to a winding start end of the positive electrode plate instead. The positive active material layer 130 is located on the surface of the first primer coating 120a. A tab may be welded to the surface 110a of the positive current collector located at the winding start end of the positive electrode plate. Comprehensibly, the surface 110a of the positive current collector may be a blank current collector surface reserved during coating and uncoated with the primer coating and the positive active material layer, or may be a blank current collector surface formed by hollowing out a part of the first primer coating 120a located at the start end of the positive electrode plate after continuous coating.

In this application, the raised region may be a region relatively thick in the second primer coating. The recessed region may be a region relatively thin in the second primer coating. The raised region and the recessed region may be distributed alternately. The method for forming the raised region and the recessed region is not particularly limited herein. Regardless of the method for forming the raised region and the recessed region, any raised region and recessed region are appropriate as long as the second primer coating is caused to include a relatively thick raised region and a relatively thin recessed region so that the outermost turn of the electrode assembly is rough to some extent. As an example, the raised region may be formed by thickening a part of the primer coating, and the recessed region may be formed by an untreated part of the primer coating, a thinned part of the primer coating, or a hollowed part of the primer coating. As another example, the raised region may be formed by an untreated primer coating, and the recessed region may be a thinned primer coating or a hollowed primer coating. As still another example, the raised region may be formed by a thinned primer coating, and the recessed region may be formed by a thinned primer coating or a hollowed primer coating.

Although the underlying mechanism still remains unclear, the applicant hereof unexpectedly discovers that the first primer coating and the second primer coating applied on the surface of the positive current collector can simply and effectively improve the safety performance of the secondary battery.

Specifically, without intending to be limited by any theory or explanation, the second primer coating disposed on at least a part of the surface of the outermost turn of the electrode assembly is rougher than a blank positive current collector or a uniform-thickness primer coating, so as to provide a relatively high friction coefficient between the outermost turn of the electrode assembly and the inner wall of the housing. In this way, in the case of a drop of the secondary battery, the electrode assembly is not prone to slide relative to the housing, thereby reducing the impact of the electrode assembly on the housing, reducing the risk of failure of the secondary battery caused by the drop, and in turn, improving the safety performance of the secondary battery. In addition, by disposing the second primer coating on at least a part of the surface of the outermost turn of the electrode assembly, this application can reduce the risk of failure of the secondary battery caused by a drop. The secondary battery of this application is simple in term of the manufacturing process, without introducing a complex structure inside the secondary battery, thereby greatly reducing the processing difficulty and manufacturing cost of the secondary battery. In this way, the secondary battery of this application can be of high safety performance and can be manufactured at a high production capacity.

In some embodiments, the area of the raised region may account for 55% to 70% of the area of the second primer coating. For example, the area of the raised region may account for 55%, 58%, 60%, 62%, 65%, 68%, or 70% of the area of the second primer coating, or the area percentage of the raised region may be a value falling within a range formed by any two thereof.

Without intending to be limited by any theory or explanation, when the area percentage of the raised region in the second primer coating falls within the above suitable range, the second primer coating can be of both high roughness and suitable mechanical strength. In this way, the outermost turn of the electrode assembly can possess not only a high coefficient of friction with the inner wall of the housing, but also suitable strength. Therefore, when the secondary battery of this application drops, the electrode assembly is not prone to slide relative to the housing. In addition, the electrode assembly can withstand a specified impact force, thereby further improving the safety performance of the secondary battery.

In some embodiments, a ratio of the thickness d₁ of the recessed region to the thickness d₂ of the raised region is 0 to 4/5. For example, the ratio of the thickness d₁ of the recessed region to the thickness d₂ of the raised region may be 0, 1/5, 1/4, 1/3, 2/5, 1/2, 3/5, 2/3, 3/4, 4/5, or a value falling within a range formed by any two thereof. In a vertical direction from the surface of the positive current collector to a point away from the surface of the current collector, the thickness of the raised region is greater than the thickness of the recessed region. The thickness d₁ of the recessed region is a vertical distance from the surface, away from the positive current collector, of the recessed region to the surface of the positive current collector. The thickness d₂ of the raised region is a vertical distance from the surface, away from the positive current collector, of the raised region to the surface of the positive current collector.

Without intending to be limited by any theory or explanation, the ratio of the thickness of the recessed region to the thickness of the raised region, falling within the above appropriate range, can increase the friction coefficient between the outermost turn of the electrode assembly and the inner wall of the housing, and at the same time, endow the second primer coating with relatively high structural stability. In this way, a relatively large friction coefficient can be maintained between the outermost turn of the electrode assembly and the inner wall of the housing, thereby reducing the risk of failure of the secondary battery that drops, and in turn, improving the safety performance of the secondary battery.

In some embodiments, the ratio of the thickness d₁ of the recessed region to the thickness d₂ of the raised region is 1/3 to 4/5. For example, the ratio of the thickness d₁ of the recessed region to the thickness d₂ of the raised region may be 1/3, 1/2, 2/3, 3/5, 3/4, 4/5, or a value falling within a range formed by any two thereof.

Without intending to be limited by any theory or explanation, the ratio of the thickness of the recessed region to the thickness of the raised region, falling within the above appropriate range, can increase the friction coefficient between the outermost turn of the electrode assembly and the inner wall of the housing, and at the same time, further improve the structural stability of the second primer coating. This setting further reduces the risk of failure of the secondary battery that drops, and thereby further improving the safety performance of the secondary battery.

In some embodiments, the thickness d₁ of the recessed region may be 1 µm to 2.5 µm. For example, the thickness d₁ of the recessed region may be 1 µm, 1.2 µm, 1.5 µm, 1.8 µm, 2 µm, 2.2 µm, 2.5 µm, or a value falling within a range formed by any two thereof.

Without intending to be limited by any theory or explanation, when the thickness of the recessed region falls within the above suitable range, on the one hand, this setting reduces the processing difficulty of the second primer coating. On the other hand, this setting makes the second primer coating be of relatively high mechanical strength, thereby making the second primer coating be good structural stability. Still on the other hand, this setting enables the secondary battery to maintain a high volumetric energy density. In this way, the secondary battery of this application can be of high safety performance and a high volumetric energy density.

In some embodiments, µ is a friction coefficient between the outermost turn of the electrode assembly and an inner wall of the housing, and 0.35 ≤ µ ≤ 0.5. For example, the value of µ may be 0.35, 0.4, 0.45, 0.5, or a value falling within a range formed by any two thereof.

In some embodiments, µ is a friction coefficient between the outermost turn of the electrode assembly and an inner wall of the housing, and 0.39 ≤ µ ≤ 0.45. For example, the value of µ may be 0.39, 0.40, 0.41, 0.42, 0.43, 0.44, 0.45, or a value falling within a range formed by any two thereof.

Without intending to be limited by any theory or explanation, when the friction coefficient between the outermost turn of the electrode assembly and the inner wall of the housing falls within the above appropriate range, the risk of failure of the secondary battery that drops is significantly reduced, thereby further improving the safety performance of the secondary battery.

The shapes of the raised region and the recessed region are not limited herein. In some embodiments, the raised region may include a plurality of protrusions spaced apart. In some embodiments, the recessed region may include a plurality of recesses spaced apart. As an example, the raised region may be formed by thickening a part of the primer coating. The thickened regions may form a plurality of protrusions spaced apart. As another example, the recessed region may be formed by thinning a part of the primer coating or by hollowing out a part of the primer coating. The thinned or hollowed regions may form a plurality of recesses spaced apart. As still another example, the second primer coating may include a plurality of protrusions formed by thickening a part of the primer coating and a plurality of recesses formed by thinning a part of the primer coating or by hollowing out a part of the primer coating. A plurality of protrusions and a plurality of recesses may be spaced apart, or may be continuously disposed in different regions of the second primer coating, respectively.

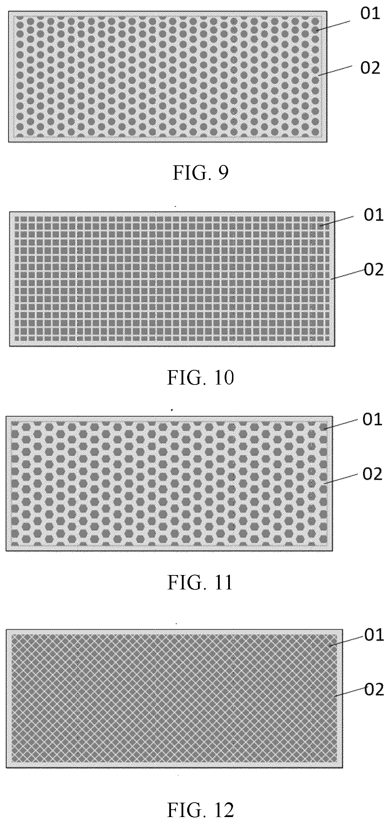

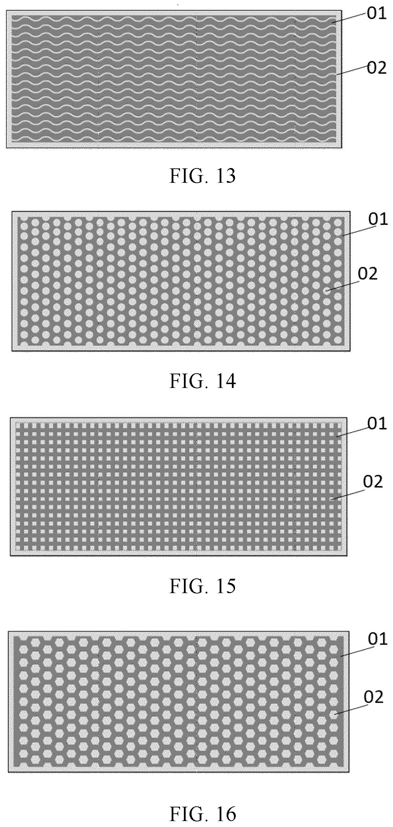

In some embodiments, as shown in FIG. 9, FIG. 10, FIG. 11, or FIG. 12, the raised region may include a plurality of protrusions 01 spaced apart, and the recessed region may include a plurality of recesses 02 disposed continuously. As another example, as shown in FIG. 13, the raised region may include a plurality of protrusions 01 spaced apart, and the recessed region may include a plurality of recesses 02 spaced apart. As still another example, as shown in FIG. 14, FIG. 15, or FIG. 16, the raised region may include a plurality of protrusions 01 disposed continuously, and the recessed region may include a plurality of recesses 02 spaced apart.

In some embodiments, the outermost turn of the electrode assembly includes two curved portions and two straight portions. The second primer coating is disposed on a surface of at least one of the straight portions. In order to further increase the friction surface, the second primer coating may be disposed on the whole outermost turn instead.

In some embodiments, the peel strength between the primer coating and the positive current collector may be greater than or equal to 150 N/m, for example, may be at least 150 N/m, at least 200 N/m, at least 300 N/m, or at least 400 N/m.

Without intending to be limited by any theory or explanation, the peel strength between the primer coating and the positive current collector, falling within the above range that is relatively high, can enable the primer coating and the positive current collector to be closely bonded together, thereby improving the structural stability of the positive current collector. As a result, when the secondary battery is penetrated by a nail or mechanically impacted, the primer coating is not prone to drop from the surface of the positive current collector to expose the positive current collector, thereby reducing the probability of short-circuiting caused by the contact between the positive current collector and the negative electrode. This arrangement can further improve the safety performance of the secondary battery.

The composition of the primer coating is not limited herein, as long as the technical solutions corresponding to various embodiments of this application can be implemented. As an example, the primer coating may include inorganic particles, a binder, a conductive agent, and optionally an auxiliary agent. As an example, the primer coating may include just a binder, a conductive agent, and optionally an auxiliary agent. As an example, in the primer coating, the second primer coating may include inorganic particles, a binder, optionally a conductive agent, and optionally an auxiliary agent. As an example, in the primer coating, the second primer coating may include just a binder, optionally a conductive agent, and optionally an auxiliary agent.

The inorganic particles may be selected from inorganic particles well-known in the art for use in the primer coating. For example, the inorganic particles may be at least one selected from boehmite, diaspore, aluminum oxide, barium sulfate, calcium carbonate, or calcium silicate. Optionally, the inorganic particles may be selected from boehmite and/or aluminum oxide.

The binder may be selected from the binders well-known in the art for use in the primer coating. For example, the binder may be at least one selected from a polypropylene binder, a polyacrylate ester binder, an acrylonitrile multi-copolymer, or a carboxymethyl cellulose salt. Optionally, the binder may be polymerized from one or more monomers selected from acrylonitrile, an acrylate salt, acrylamide, or an acrylate ester.

The conductive agent may be a conductive agent well-known in the art for use in the primer coating. For example, the conductive agent may be at least one selected from conductive carbon black (Super P), carbon fiber, graphene, or carbon nanotubes (CNT).

In some embodiments, based on the total mass 100 wt%, the primer coating may include 50 wt% to 95 wt% inorganic particles, 2 wt% to 50 wt% binder, and 0.5 wt% to 10 wt% conductive agent.

In some embodiments, based on the total mass 100 wt%, the primer coating may include 50 wt% to 95 wt% inorganic particles, 5 wt% to 50 wt% binder, and 0 to 2 wt% other optional auxiliary agents. The other optional auxiliary agents may include, but are not limited to, a leveling agent or a dispersant.

In the secondary battery of this application, specific types of the positive active material in the positive active material layer are not particularly limited, and may be selected as required. As an example, the positive active material may include one or more of lithium transition metal oxide, olivine-structured lithium-containing phosphate, or a modified compound thereof. In the secondary battery according to this application, the modified compound of each positive active material described above may be formed by modification of the positive active material, where the modification is doping, surface coating, or both doping and surface coating.

As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the positive active material layer further optionally includes a binder. The specific type of the binder is not particularly limited, and may be selected as required. As an example, the binder includes, but is not limited to, at least one of polyvinylidene fluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), or fluorine-containing acrylate resin.

In some embodiments, the positive active material layer further optionally includes a conductive agent. The specific type of the conductive agent is not particularly limited, and may be selected as required. As an example, the conductive agent includes, but is not limited to, at least one of conductive graphite, superconductive carbon, acetylene black, carbon black, Ketjen black, carbon dots, carbon nanotubes, graphene, or carbon nanofibers.

The positive electrode plate in this application may be prepared by a conventional method in this field. For example, a method for preparing the positive electrode plate includes: applying a primer slurry to a surface of a positive current collector, and treating a part of the surface of the primer coating to form a second primer coating and thus obtain a positive current collector containing a first primer coating and a second primer coating on the surface. A positive active material layer is usually formed by applying the positive electrode slurry onto the surface of the first primer coating of the positive current collector and then drying and cold-pressing the coated current collector. The positive electrode slurry is generally formed by dispersing a positive active material, an optional conductive agent, an optional binder, and any other ingredients into a solvent and then stirring well. The solvent may be, but without being limited to, N-methyl-pyrrolidone (NMP).

In the secondary battery of this application, the material, composition, and manufacturing method of the negative electrode plate may include any technology well-known in the prior art.

The negative electrode plate includes a negative current collector and a negative active material layer disposed on at least one surface of the negative current collector and containing a negative active material. As an example, the negative current collector includes two surfaces opposite to each other in a thickness direction of the negative current collector. The negative active material layer is disposed on either or both of the two opposite surfaces of the negative current collector.

The negative current collector of the negative electrode plate is not particularly limited in this application. The negative current collector may be made of a metal foil or a porous metal sheet, for example, a foil or porous plate made of metal such as copper, nickel, titanium, or iron, or an alloy thereof. As an example, the negative current collector is a copper foil.

The specific type of the negative active material is not particularly limited, and may be selected as required. As an example, other negative active materials include but are not limited to at least one of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, SnO₂, spinel-structured Li₄Ti₅O₁₂, or a Li-Al alloy.

In some embodiments, the negative active material layer further optionally includes a binder. The specific type of the binder is not particularly limited, and may be selected as required. As an example, the binder includes, but is not limited to, at least one of styrene-butadiene rubber (SBR), polyvinylidene difluoride (PVDF), polytetrafluoroethylene (PTFE), polyvinyl butyral (PVB), water-based acrylic resin, or carboxymethyl cellulose.

In some embodiments, the negative active material layer further optionally includes a conductive agent. The specific type of the conductive agent is not particularly limited, and may be selected as required. As an example, the conductive agent includes, but is not limited to, at least one of conductive graphite, superconductive carbon, acetylene black, carbon black, Ketjen black, carbon dots, carbon nanotubes, graphene, or carbon nanofibers.

In some embodiments, the negative active material layer further optionally includes other agents, such as a thickener (for example, sodium carboxymethyl cellulose (CMC-Na)).

The negative electrode plate in this application may be prepared by a conventional method in this field. For example, a method for preparing the negative electrode plate includes: dispersing a negative active material, a conductive agent, a binder, and a thickener in a solvent such as N-methyl-pyrrolidone (NMP) or deionized water to form a homogeneous negative electrode slurry, coating a negative current collector with the negative electrode slurry, and performing steps such as oven-drying and cold-pressing to obtain a negative electrode plate.

In addition, the negative electrode plate according to this application does not exclude other additional functional layers different from the negative active material layer. For example, in some embodiments, the negative electrode plate of this application further includes a conductive primer coating (for example, formed of a conductive agent and a binder) disposed on a surface of the negative current collector and sandwiched between the current collector and the active material layer. In some other embodiments, the negative electrode plate according to this application further includes a protection layer overlaying the surface of the negative active material layer.

In the secondary battery of this application, disposed between the positive electrode plate and the negative electrode plate, the separator primarily serves to prevent a short circuit between the positive electrode plate and the negative electrode plate while allowing passage of active ions. The type of the separator is not particularly limited herein, and may be any well-known porous separator that is highly stable both chemically and mechanically.

In some embodiments, the material of the separator may be one or more selected from, but is not limited to, glass fibers, non-woven fabric, polyethylene, polypropylene, or polyvinylidene fluoride. The separator may be a single-layer film or a multilayer composite film. When the separator is a multilayer composite film, different layers may be made of the same material or different materials. In some embodiments, the separator may be coated with a ceramic coating or a metal oxide coating.

The secondary battery of this application may further include an electrolyte solution. The electrolyte solution serves to conduct active ions between the positive electrode plate and the negative electrode plate. The electrolyte solution applicable to the secondary battery in this application may be an electrolyte solution known in the prior art.

In some embodiments, the electrolyte solution includes an organic solvent, a lithium salt, and optionally an additive. The types of the organic solvent, the lithium salt, and the additive are not particularly limited, and may be selected according to actual needs.

In some embodiments, as an example, the lithium salt includes but is not limited to at least one of lithium hexafluorophosphate (LiPF₆), (lithium tetrafluoroborate (LiBF₄), lithium perchlorate (LiClO₄), lithium bisfluorosulfonimide (LiFSI), lithium bis(trifluoromethanesulfonyl)imide (LiTFSI), lithium trifluoromethanesulfonate (LiTFS), lithium difluoro(oxalato) borate (LiDFOB), lithium bis(oxalato) borate (LiBOB), lithium difluorophosphate (LiPO2F₂), lithium difluoro(bisoxalato) phosphate (LiDFOP), and lithium tetrafluoro(oxalato) phosphate (LiTFOP). Of the above lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As an example, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane)phosphate (TMSP), or tris(trimethylsilane)borate (TMSB).

The electrolyte solution may be prepared by a conventional method in this field. For example, the electrolyte solution may be obtained by mixing well an organic solvent, a lithium salt, and an optional additive. The order of adding the ingredients is not particularly limited. For example, the lithium salt and the optional additive may be added together to the organic solvent and mixed well to obtain the electrolyte solution; or, the lithium salt may be added to the organic solvent, and then the optional additive is added into the organic solvent and mixed well to obtain the electrolyte solution.

In this application, the friction coefficient between the outermost turn of the electrode assembly and the inner wall of the housing may be determined according to the test standard GB/T 10006-2021 *Plastics-Film and Sheeting-Determination of the Coefficients of Friction.*

In this application, the thicknesses of the primer coating may be measured using a scanning electron microscope (SEM).

As an example, the thickness of the first primer coating may be measured by the following steps: Soaking the positive electrode plate in dimethyl carbonate (DMC), and then baking the positive electrode plate in an oven at 60 °C to 80 °C; cross-sectioning the positive electrode plate in a region coated with the first primer coating by performing ion beam cross-section polishing; spraying gold on the cross-section; capturing a cross-section image by using SEM, and measuring the thickness of the single-layer coating at different positions (excluding the positive current collector) by using a measurement tool provided by the software. Each sample is sectioned in at least 3 positions to obtain cross-sections, and at least 3 measurement points are taken in each cross-section. The average of the measured values at the measurement points is the thickness of the first primer coating.

As another example, the thickness of the raised region in the second primer coating may be measured by the following steps: Soaking the positive electrode plate in DMC, and then baking the positive electrode plate in an oven at 60 °C to 80 °C; cross-sectioning the positive electrode plate in a region coated with the second primer coating by performing ion beam cross-section polishing; spraying gold on the cross-section; capturing a cross-section image by using SEM, and measuring the thickness of the coating in the raised region at different positions (excluding the positive current collector) by using a measurement tool provided by the software. Each sample is sectioned in at least 3 positions to obtain cross-sections, and at least 3 raised region measurement points are taken in each cross-section. The average of the measured values at the measurement points is the thickness of the raised region in the second primer coating.

Still as another example, the thickness of the recessed region in the second primer coating may be measured by the following steps: Soaking the positive electrode plate in DMC, and then baking the positive electrode plate in an oven at 60 °C to 80 °C; cross-sectioning the positive electrode plate in a region coated with the second primer coating by performing ion beam cross-section polishing; sputter-coating the cross-section; capturing a cross-section image by using SEM, and measuring the thickness of the coating in the recessed region at different positions (excluding the positive current collector) by using a measurement tool provided by the software. Each sample is sectioned in at least 3 positions to obtain cross-sections, and at least 3 recessed region measurement points are taken in each cross-section. The average of the measured values at the measurement points is the thickness of the recessed region in the second primer coating.

In this application, the area percentage of the raised region in the second primer coating may be measured by a scanning electron microscope (SEM). As an example, a sample coated with the second primer coating is placed and photographed in the field of view of the SEM. Due to the high resolution of the SEM, the raised region can be identified and marked by circling. The area S₁ of the circled raised regions in the field of view is counted. The area of the field of view is calculated so that the area S₀ of the second primer coating is obtained. S₁/S₀ is calculated to obtain the area percentage of the raised region in the second primer coating.

In this application, the peel strength between the primer coating and the positive current collector bears the meaning well-known in the art, and may be measured by using methods and instruments well-known in the art, for example, by a 90° angle method by using a GoTech tensile machine.

It is hereby noted that various parameters tested above for the positive current collector or the primer coating may be tested by taking samples during preparation of the battery, or may be tested by taking samples among the prepared secondary batteries.

When the samples to be tested are taken among the prepared secondary batteries, as an example, the following test steps may be performed: Discharging a secondary battery (for safety, the battery is generally caused to be in a fully discharged state); disassembling the battery and taking out a positive electrode plate; soaking the electrode plate in dimethyl carbonate (DMC) for a period (for example, 2 to 10 hours); and then taking out the positive electrode plate, drying the electrode plate at a specified temperature for a specified time (for example, at 60 °C for 4 hours), and taking out the dried positive electrode plate. At this time, samples may be taken from the dried positive electrode plates to test various parameters related to the positive current collector or primer coating of this application.

Although, in the above description of the secondary battery in some embodiments of this application, the beneficial effects of the secondary battery of this application are mainly described by using a lithium-ion secondary battery as a specific example, a person skilled in the art easily understands that the primer coating of this application is contained in the surface of the positive current collector in the secondary battery of this application. Therefore, when applied to other types of secondary batteries, the primer coating can still achieve equivalent beneficial effects.

### Electrical device

A second aspect of this application provides an electrical device. The electrical device includes the secondary battery disclosed in the first aspect of this application.

The electrical device is not particularly limited in this application, and may be any electronic device known in the prior art. In some embodiments, the electrical device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

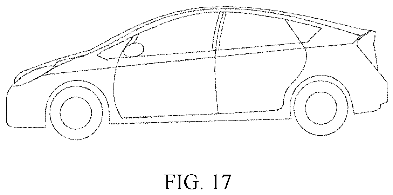

FIG. 17 shows an electrical device as an example. The electrical device may be a battery electric vehicle, a hybrid electric vehicle, a plug-in hybrid electric vehicle, or the like.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiment 1

### Preparing a negative electrode plate

Graphite, styrene-butadiene rubber (SBR) as a binder, carbon black as a conductive agent, and sodium carboxymethyl cellulose (CMC-Na) as a thickener are mixed at a mass ratio of 97.4 : 1.2 : 1.4. An appropriate amount of deionized water is added, and then the mixture is stirred well to obtain a negative electrode slurry. The negative electrode slurry is applied to both surfaces of the negative current collector copper foil, and then dried in a 120 °C oven. The dried current collector undergoes cold-pressing, slitting, and the like to obtain a negative electrode plate.

### Preparing a positive electrode plate

Boehmite, polyacrylate ester, conductive agent carbon black, and other auxiliary agents are mixed at a mass ratio of 92.5 : 5 : 2 : 0.5, and dispersed evenly in water to obtain a primer slurry.

The primer slurry is applied to both surfaces of positive current collector aluminum foil (with only a tab welding region being exposed) according to a specified process such that the primer slurry completely covers the surface of the primer coating. The slurry is dried in an oven at 80° C to 150 °C to obtain a positive current collector coated with the primer coating on both sides. The thickness of the primer coating on a single side is 3 µm.

At the tail of the positive current collector in a region where the outermost turn of the electrode assembly is formed by winding, a part of the primer coating is thinned to form a second primer coating. The remaining primer coating other than the second primer coating is the first primer coating.

Lithium iron phosphate as a positive active material, PVDF as a binder, and carbon black as a conductive agent are mixed at a mass ratio of 97.5 : 1.3: 1.2. An appropriate amount of NMP solvent is added, the mixture is stirred well, and then an additive is added. The mixture is mixed well to obtain a positive electrode slurry. The positive electrode slurry is applied evenly onto the surface of the first primer coating on both sides of the positive current collector, and then dried in an oven at 80 °C to 150 °C. The dried current collector is cold-pressed, slit, and the like to obtain a positive electrode plate.

### Preparing an electrolyte solution

Ethylene carbonate (EC), ethyl methyl carbonate (EMC), and diethyl carbonate (DEC) are mixed at a volume ratio of 1 : 1 : 1 to obtain an organic solvent, and then LiPF₆ is dissolved in the organic solvent, and then fluoroethylene carbonate (FEC) is added and stirred well to obtain an electrolyte solution. In the electrolyte solution, the concentration of LiPF₆ is 1 mol/L. Based on the total mass of the electrolyte solution, the mass percent of the fluoroethylene carbonate is 5%.

### Preparing a separator

A 14 µm-thick porous polypropylene film (manufactured by Celgard) is used as a separator.

### Preparing a secondary battery

The positive electrode plate, the separator, and the negative electrode plate are stacked sequentially, and the stacked structure is wound such that the second primer coating is located on the outermost turn, so as to obtain an electrode assembly. The electrode assembly is placed into an outer package, and then the electrolyte solution is injected into the package. The steps such as sealing, static standing, chemical formation, and shaping are performed to obtain a secondary battery.

### Embodiments 2 to 5

Based on the preparation process in Embodiment 1, the area percentage of the raised region in the second primer coating is adjusted according to Table 1 to prepare the positive electrode plates in Embodiments 2 to 5. The preparation processes of the negative electrode plate, the positive electrode plate, the electrolyte solution, the separator, and the secondary battery in Embodiments 2 to 5 are the same as those in Embodiment 1.

### Embodiments 6 to 7

The preparation process of the primer coating is adjusted based on the preparation process in Embodiment 1. At the tail of the positive current collector in a region where the outermost turn of the electrode assembly is formed by winding, a part of the primer coating is thickened to form a second primer coating, so that the positive electrode plates in Embodiments 6 to 7 are prepared. The preparation processes of the negative electrode plate, the positive electrode plate, the electrolyte solution, the separator, and the secondary battery in Embodiments 6 to 7 are the same as those in Embodiment 1.

### Embodiments 8 to 13

The thickness of the thinned region in the second primer coating is adjusted based on the preparation process in Embodiment 1 to prepare the positive electrode plates in Embodiments 8 to 13. In the second primer coating in Embodiment 13, the thickness of the thinned region is 0, indicating that the primer coating is hollowed out to expose the positive current collector in the recessed region. The preparation processes of the negative electrode plate, the positive electrode plate, the electrolyte solution, the separator, and the secondary battery in Embodiments 8 to 13 are the same as those in Embodiment 1.

### Embodiments 14 to 16

The preparation process of the primer coating is adjusted based on the preparation process in Embodiment 1 to adjust the location of the thinned region of the second primer coating in the outer turn of the electrode assembly, thereby preparing the positive electrode plates in Embodiments 14 to 16. The preparation processes of the negative electrode plate, the positive electrode plate, the electrolyte solution, the separator, and the secondary battery in Embodiments 14 to 16 are the same as those in Embodiment 1. In the electrode assembly in Embodiment 15, the location of the second primer coating is shown in FIG. 4. In the electrode assembly in Embodiment 15, the location of the second primer coating is shown in FIG. 3. In the electrode assembly in Embodiment 16, the location of the second primer coating is shown in FIG. 2.

### Embodiment 17

The preparation process in this embodiment is based on the preparation process in Embodiment 1, but the constituents of the second primer coating are different from the constituents of the first primer coating, and the second primer coating does not contain a conductive agent; and the boehmite, the polyacrylate ester, and other auxiliary agents are mixed at a mass ratio of 94.5 : 5 : 0.5 and dispersed evenly in water to obtain a primer coating slurry.

### Comparative Embodiments 1 to 3

Based on the preparation process in Embodiment 1, the area percentage of the raised region in the second primer coating is adjusted according to Table 1 to prepare the positive electrode plates in Comparative Embodiments 1 to 3. The preparation processes of the negative electrode plate, the positive electrode plate, the electrolyte solution, the separator, and the secondary battery in Comparative Embodiments 1 to 3 are the same as those in Embodiment 1.

### Comparative Embodiment 4

The preparation process of the primer coating is adjusted based on the preparation process in Embodiment 1. The primer coating is applied onto just a part of the surface of the aluminum foil so that the outermost turn of the electrode assembly is not provided with the primer coating, thereby preparing the positive electrode plate in Comparative Embodiment 4. The preparation processes of the negative electrode plate, the positive electrode plate, the electrolyte solution, the separator, and the secondary battery in Comparative Embodiment 4 are the same as those in Embodiment 1.

### Comparative Embodiment 5

The preparation process of the primer coating is adjusted based on the preparation process in Embodiment 1, without thinning the primer coating, so that the outermost turn of the electrode assembly is provided with a primer coating of a uniform thickness, thereby preparing the positive electrode plate in Comparative Embodiment 5. The preparation processes of the negative electrode plate, the positive electrode plate, the electrolyte solution, the separator, and the secondary battery in Comparative Embodiment 5 are the same as those in Embodiment 1.

In each embodiment and comparative embodiment, the thickness of the recessed region is d₁ µm, the thickness of the raised region is d₂ µm, the ratio of the thickness of the recessed region to the thickness of the raised region is d₁/d₂, and the area percentage of the raised region in the second primer coating is S₁/S₀, which are shown in Table 1, respectively. d₁, d₂, and S₁/S₀ can be measured by the method set forth in the specification hereof, and are not described in more detail here.

### Performance Test

A secondary battery is discharged and then disassembled, and a positive electrode plate is taken out. The positive electrode plate is soaked in dimethyl carbonate (DMC) for 2 hours, and then taken out, and dried at 60 °C for 4 hours. The dried positive electrode plate is taken out.

The following tests are performed on the above positive electrode plates, as well as the secondary batteries prepared in each embodiment and comparative embodiment. The test results are shown in Table 1.

### (1) Test of friction coefficient µ

The friction coefficient µ between the outermost turn of the electrode assembly and the inner wall of the housing is measured with reference to the standard GB/T 10006-2021 *Plastics-Film and Sheeting-Determination of the Coefficients of Friction.* The specific process is as follows:
A packaging aluminum film is cut into a size of 200±5 mm in length and 80±2 mm in width. The aluminum film is affixed flat on the surface of the test platform, and fixed with adhesive tape. A part of the positive electrode plate, which forms the outermost turn of the electrode assembly, is selected and cut into a specimen of 63±5 mm in length and 93±2 mm in width. Double-sided tape is affixed onto the bottom of a square slider (with a side length 63 mm) with a total mass of 200 g±2 g (to generate a normal force of F_{P} = 1.96 N±0.02 N) and an area of 40 cm². The non-test surface of the specimen (a part of the surface of the specimen, which is not used for forming the outermost turn of the electrode assembly) is fastened onto the slider. The slider to which the specimen is affixed is placed onto the surface of the test platform to which the packaging aluminum film is affixed, such that the test surface of the specimen (that is, the surface of the second primer coating, located at the outermost turn of the electrode assembly, in the specimen) is in contact with the aluminum film. A driving mechanism drags the slider and the aluminum film at a speed of 100 mm/min. The average force in the initial 6 cm of sliding length is determined, denoted as F_{D}. The friction coefficient between the outermost turn of the electrode assembly and the inner wall of the housing is µ = F_{D}/F_{P} (where F_{P} = 1.96 N, that is, the normal force generated by the slider with a total mass of 200 g±2 g).

### (2) Drop test of the secondary battery

A drop test is performed with reference to the national standard GB 8897.4-2008, and the drop test pass rate is recorded in the form of "number of specimens passing the test/total number of specimens tested".

In Table 1, "/" means that the corresponding operation is not performed or that the corresponding parameter is not measurable.

**Table 1**

| Serial number | d₁ (µm) | d₂ (µm) | d₁/d₂ | S₁/S₀ | Friction coefficient µ | Drop test pass rate |
|---|---|---|---|---|---|---|
| Embodiment 1 | 2 | 3 | 2/3 | 0.5 | 0.38 | 16/20P |
| Embodiment 2 | 2 | 3 | 2/3 | 0.55 | 0.42 | 17/20P |
| Embodiment 3 | 2 | 3 | 2/3 | 0.6 | 0.42 | 17/20P |
| Embodiment 4 | 2 | 3 | 2/3 | 0.7 | 0.41 | 17/20P |
| Embodiment 5 | 2 | 3 | 2/3 | 0.8 | 0.37 | 16/20P |
| Embodiment 6 | 3 | 4.5 | 2/3 | 0.5 | 0.35 | 15/20P |
| Embodiment 7 | 3 | 4.5 | 2/3 | 0.6 | 0.35 | 15/20P |
| Embodiment 8 | 2.4 | 3 | 4/5 | 0.6 | 0.39 | 17/20P |
| Embodiment 9 | 1.5 | 3 | 1/2 | 0.6 | 0.43 | 18/20P |
| Embodiment 10 | 1.2 | 3 | 2/5 | 0.6 | 0.43 | 18/20P |
| Embodiment 11 | 1 | 3 | 1/3 | 0.6 | 0.44 | 17/20P |
| Embodiment 12 | 0.7 | 3 | 1/4 | 0.6 | 0.44 | 15/20P |
| Embodiment 13 | 0 | 3 | 0 | 0.6 | 0.45 | 14/20P |
| Embodiment 14 | 2 | 3 | 2/3 | 0.6 | 0.42 | 14/20P |
| Embodiment 15 | 2 | 3 | 2/3 | 0.6 | 0.42 | 15/20P |
| Embodiment 16 | 2 | 3 | 2/3 | 0.6 | 0.42 | 17/20P |
| Embodiment 17 | 2 | 3 | 2/3 | 0.6 | 0.42 | 18/20P |
| Comparative Embodiment 1 | 2 | 3 | 2/3 | 0.4 | 0.33 | 13/20P |
| Comparative Embodiment 2 | 2 | 3 | 2/3 | 0.9 | 0.33 | 13/20P |
| Comparative Embodiment 3 | 2 | 3 | 2/3 | 0.95 | 0.33 | 13/20P |
| Comparative Embodiment 4 | / | / | / | / | 0.21 | 4/20 |
| Comparative Embodiment 5 | / | / | / | / | 0.28 | 10/20 |

As can be seen from Table 1, in the secondary battery of this application, a second primer coating is included at the outermost turn of the electrode assembly, thereby significantly reducing the risk of failure of the secondary battery caused by a drop, and in turn, improving the safety performance of the secondary battery.

Specifically, as can be seen from the test results of Embodiments 1 to 5, when the thickness of the recessed region and the thickness of the raised region remain constant, with the increase of the area percentage of the raised region in the second primer coating, the friction coefficient between the outermost turn of the electrode assembly and the inner wall of the housing assumes a tendency to increase and then decrease. When the area percentage of the raised region in the second primer coating falls within the range specified herein, the drop test pass rate of the secondary battery can be improved.

As can be seen from Embodiments 1 and 6 and Embodiments 7 and 3, the second primer coating formed by thinning a part of the primer coating and the primer coating formed by thickening a part of the primer coating can both contribute to a relatively high friction coefficient between the outermost turn of the electrode assembly and the inner wall of the housing, thereby improving the drop test pass rate of the secondary battery.

As can be seen from Embodiment 3 and Embodiments 8 to 12, for the second primer coating formed by thinning a part of the primer coating, with the decrease of the thickness of the recessed region, the friction coefficient between the outermost turn of the electrode assembly and the inner wall of the housing generally assumes a tendency to increase. As can be seen from the test results of Embodiments 13, the second primer coating formed by hollowing out a part of the primer coating can also increase the friction coefficient between the outermost turn of the electrode assembly and the inner wall of the housing. However, the recessed region formed by thinning the primer coating reduces the strengthening effect of the primer coating thickness on the strength of the aluminum foil to some extent. Therefore, with the increase of the degree of recession, although the friction coefficient increases, the reinforcement effect of the primer coating on the aluminum foil decreases, the risk of aluminum foil tearing during the drop increases, and the drop test pass rate decreases. When the thickness of the recessed region falls within a suitable range, the drop test pass rate of the secondary battery can be significantly improved.

As can be seen from Embodiment 3 and Embodiments 15 to 17, in the two straight portions at the outermost turn of the electrode assembly, at least one straight portion is provided with the second primer coating, thereby improving the drop test pass rate of the secondary battery. When the second primer coating is disposed on both straight portions, the drop test pass rate of the secondary battery can be further improved. The drop test pass rates of the secondary batteries in Embodiment 3 is equivalent to that in Embodiment 17. It indicates that when the curved portion on the outermost turn of the electrode assembly is not squeezed or is squeezed to just a low degree, the region provided with the second primer coating on the outermost turn of the electrode assembly may be reduced, and the second primer coating is provided just on the two straight portions on the outermost turn of the electrode assembly, thereby reducing the raw material cost of the secondary battery. In addition, as can be seen from Embodiment 3 and Embodiment 18, when the second primer coating does not contain a conductive agent and the content of the inorganic particles in the second primer coating is relatively high, the drop test pass rate is further improved. That is because the increase of the content of the inorganic particles enhances the strength of the outermost turn of the electrode assembly. At the same time, without containing a conductive agent, the second primer coating is insulative, thereby preventing metal debris from entering the electrode assembly during the drop and avoiding a resultant short circuit.

In contrast, the outermost turn of the electrode assembly in Comparative Embodiment 4 is not provided with a primer coating, and therefore, the friction coefficient between the outermost turn of the electrode assembly and the inner wall of the housing is relatively small, and the drop test pass rate of the secondary battery is significantly lower than that in Embodiments 1 to 17. The outermost turn of the electrode assembly in Comparative Embodiment 5 is provided with a primer coating of a uniform thickness, but the friction coefficient between the outermost turn of the electrode assembly and the inner wall of the housing is still relatively small, and the drop test pass rate of the secondary battery is also lower than that in Embodiments 1 to 17. The outermost turn of the electrode assembly in Comparative Embodiments 1 to 3 is provided with a second primer coating that contains a raised region and a recessed region, but the area percentage of the raised region in the second primer coating in Comparative Embodiment 1 is excessively low, and the area percentage of the raised region in the second primer coating in Comparative Embodiments 2 to 3 is excessively high. Therefore, in Comparative Embodiments 1 to 3, the friction coefficient between the outermost turn of the electrode assembly and the inner wall of the housing is still relatively small, and the drop test pass rate of the secondary battery is also unsatisfactory.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A secondary battery, comprising an electrode assembly and a housing configured to accommodate the electrode assembly; and
a positive electrode plate in the electrode assembly comprises:
a positive current collector and a primer coating applied on a surface of the positive current collector,
wherein, along a winding direction of the electrode assembly, the primer coating comprises a first primer coating and a second primer coating, the positive active material layer is located on a surface of the first primer coating, the second primer coating is disposed on at least a part of a surface of an outermost turn of the electrode assembly, the positive active material layer is not disposed on a surface of the second primer coating, a raised region and a recessed region are disposed on the second primer coating, and an area of the raised region accounts for 50% to 80% of an area of the second primer coating.

2. The secondary battery according to claim 1, wherein the area of the raised region accounts for 55% to 70% of the area of the second primer coating.

3. The secondary battery according to claim 1, wherein a ratio of a thickness d₁ of the recessed region to a thickness d₂ of the raised region is 0 to 4/5.

4. The secondary battery according to claim 1, wherein a ratio of a thickness d₁ of the recessed region to a thickness d₂ of the raised region is 1/3 to 4/ 5.

5. The secondary battery according to claim 1, wherein a thickness d₁ of the recessed region is 1 µm to 2.5 µm.

6. The secondary battery according to claim 1, wherein µ is a friction coefficient between the outermost turn of the electrode assembly and an inner wall of the housing, and 0.35 ≤ µ ≤ 0.5.

7. The secondary battery according to claim 6, wherein 0.39 ≤ µ ≤ 0.45.

8. The secondary battery according to claim 1, wherein the raised region comprises a plurality of protrusions spaced apart, and/or the recessed region comprises a plurality of recesses spaced apart.

9. The secondary battery according to claim 1, wherein the outermost turn of the electrode assembly comprises two curved portions and two straight portions, and the second primer coating is disposed on a surface of at least one of the straight portions.

10. An electrical device, comprising the secondary battery according to any one of claims 1 to 9.
